(19) Europäisches Patentamt
European Patent Office
Office européen des brevets

(11) **EP 4 793 940 A1**

(12) **EUROPEAN PATENT APPLICATION**

(43) Date of publication:
**19.08.2026 Bulletin 2026/34**

(21) Application number: **26155590.8**

(22) Date of filing: **30.01.2026**

(51) International Patent Classification (IPC):
***G09G 5/393*** *(2006.01)* ***G09G 5/395*** *(2006.01)*

(52) Cooperative Patent Classification (CPC):
**G09G 5/395; G09G 5/393;** G09G 5/363; G09G 2360/122; G09G 2360/128

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **18.02.2025 US 202519055985**

(71) Applicant: **STMicroelectronics International N.V.**
**1228 Plan-les-Ouates, Geneva (CH)**

(72) Inventors:
- **NIELSEN, Soren**
  **8000 Denmark (DK)**
- **STISSING, Martin Stig**
  **8240 Risskov (DK)**

(74) Representative: **Casalonga**
**Casalonga & Partners**
**Bayerstraße 71/73**
**80335 München (DE)**

# (54) EMULATED FULL FRAME BUFFERS FOR LIQUID CRYSTAL DISPLAY CONTROLLERS

(57) An integrated circuit for emulating a full frame buffer for a display controller comprises a frame buffer physical memory space (106); a graphics framework module (114) to render a plurality of image frames to be displayed, each image frame rendered in two or more equal size logical blocks corresponding to a different portion of the image frame; and a controller module (110) configured to read each rendered block from the frame buffer and provide each rendered block to the display (112). The graphics framework module writes each block sequentially into the frame buffer. As the controller module is reading each rendered block from the frame buffer, the graphics framework module renders a different part of a same block or a subsequent block of the same image frame, or a first block of a subsequent image frame.

100 DEVICE
102 MCU
104 SRAM
106 FRAME BUFFER
108 MEMORY MANAGEMENT UNIT
110 LCD CONTROLLER
114 GRAPHICS FRAMEWORK
112 TFT-LCD

FIG. 1

EP 4 793 940 A1

## Description

### FIELD OF THE INVENTION

Example embodiments of the present disclosure relate generally to thin film transistor liquid crystal displays and, more particularly, to liquid crystal display controllers used with thin film transistor liquid crystal displays.

### BACKGROUND

A thin film transistor liquid crystal display (TFT-LCD) is a type of flat panel display that uses transistors to control each pixel. TFT-LCDs are known for their high resolution, fast response time, and vivid colors. TFT-LCDs are active matrix displays, meaning each pixel is individually controlled. A thin film of transistors is used to control each pixel, which improves image quality. The transistors are placed on a glass plate, and an electrode activates the colors to form pixels. TFT-LCDs are used in many devices, such as televisions, computer monitors, mobile phones, video game systems, navigation systems, and automotive dashboards. Such TFT-LCDs are also referred to herein as LCDs or simply displays.

TFT-LCDs need to be continuously refreshed (typically at 60Hz) in order for each of the pixels of the display to retain their color value. This is irrespective of whether the content being displayed changes or not. The data (i.e., color value) for each pixel value must be available for the display with a very specific timing. To achieve this, it is common to have a frame buffer that contains all the pixel data so that the display can be continuously fed with this data. A frame buffer is a portion of random access memory (RAM) dedicated to contain the color values of each pixel to be shown on the display. The data in the frame buffer are periodically transferred to the display to update what is being shown. Typically, a frame buffer is large enough to contain Display-Width * Display-Height pixels * Color-Depth-In-Bits. That is, a frame buffer typically has as many bits as there are pixels in the TFT-LCD, such that a frame buffer can typically store all of the data for one complete image frame (with a complete new image frame rendered, saved to the frame buffer, and sent to the display at the refresh rate (e.g., 60Hz)).

A graphics framework is typically used to specify how the display should look and converts this information into color values for each pixel of the display. A graphics framework is a software component that performs rendering by converting a logical description of how a screen should look (backgrounds, buttons, icons, text strings, etc.) into pixels in a frame buffer. In computer graphics, rendering is the process of generating pixel data from a model using various techniques. Each graphical element will have x,y coordinates to control their placement on the screen, as well as a z-order to control which elements are in the front if several elements are placed on top of each other. A graphics framework will typically also contain functionality to interface with hardware for this purpose (utilizing HW graphics capabilities, synchronization with the LCD controller, reading touch screen input, etc.). This is written into the frame buffer and a hardware component will then transfer this data to the display periodically.

A TFT-LCD controller (also termed herein an LCD controller) is a piece of hardware (typically either a dedicated controller or part of a general purpose microcontroller) responsible for continuously providing the pixel data from the frame buffer to the display along with timing signals (such as VSYNC, HSYNC, and a clock). The display is updated by the LCD controller continuously scanning the frame buffer, one pixel at a time, and transferring the color value of that pixel to the display. Every image frame starts with a VSYNC signal generated by the LCD controller, and the typical frequency is 60Hz, such that a new image frame is displayed every 16.67 milliseconds. When the first line has been transferred, a HSYNC signal is emitted and the next line begins. The LCD controller will transfer whatever is present in the frame buffer and cannot be delayed, so if the frame buffer contents are not correct when the LCD controllers reads the value, incorrect pixels will appear on the display.

There are generally three different hardware configurations for driving a TFT-LCD, with different frame buffer locations. The simplest and typically cheapest option is one in which the frame buffer resides in internal static RAM (SRAM) of the microcontroller (MCU) of the device communicating with the TFT-LCD (e.g., mobile phone or video game system). However, there is often not enough SRAM available in such MCUs for this approach to be used. In other options, an external memory is added to the system to hold the frame buffer or a TFT-LCD is used which contains video RAM. Both of these options are more expensive and therefore less desirable.

The amount of RAM needed for a frame buffer able to contain the pixel data for a display of a given size is Display-Width * Display-Height * Bytes-Per-Pixel. For example, for an 800W * 480H display in 24 bit colors, the frame buffer would consume 800*480*3 = 1,152,000 bytes of memory. This is a very large amount of RAM for microcontroller systems. In addition, the memory used for this should be as fast as possible (meaning either internal SRAM or a HighSpeed Serial Peripheral Interface (HSPI) external RAM), due to several factors, such as modern user interfaces (UIs) containing animations at high frame rates, meaning a lot of pixel data must be written quickly to the frame buffer, and UIs often containing anti-aliased text and alpha-blended images, which means the pixel data must often be read back, blended with a different color, and then written again. Having a large amount of fast RAM available for this is a very significant cost addition to the hardware design, either in terms of needing an MCU with big SRAM blocks or having to add external memory

to the board, which also increases complexity.

Applicant has identified many technical challenges and difficulties associated with frame buffers for TFT-LCDs. Through applied effort, ingenuity, and innovation, Applicant has solved problems related to frame buffers for TFT-LCDs by developing solutions embodied in the present disclosure, which are described in detail below.

## BRIEF SUMMARY

Various embodiments described herein related to integrated circuits, microcontrollers systems, and methods for emulating a full frame buffer for an LCD controller for a TFT-LCD.

In accordance with various embodiments of the present disclosure, an integrated circuit for emulating a full frame buffer for a controller for a display is provided. In some embodiments, the integrated circuit comprises a frame buffer physical memory space; a graphics framework module configured to render a plurality of image frames to be displayed on a display, each image frame rendered in two or more equal size logical blocks, each logical block corresponding to a different portion of the image frame being rendered; and a controller module configured to read each rendered logical block from the frame buffer physical memory space and provide each rendered logical block to the display. A size of each of the logical blocks corresponds to a size of the frame buffer physical memory space. The graphics framework module is configured to write each rendered logical block sequentially into the frame buffer physical memory space. As the controller module is reading each logical block from the frame buffer physical memory space, the graphics framework module is configured to render and write into the frame buffer physical memory space a different, subsequent part of a same logical block of a same image frame, a subsequent logical block of the same image frame, or a first logical block of a subsequent image frame. The graphics framework module is configured to begin writing the different part of the same logical block of the same image frame, the subsequent logical block of the same image frame, or the first logical block of the subsequent image frame into the frame buffer physical memory space after the controller module has read a number of lines of a previously written portion of a logical block from the frame buffer physical memory space.

In some embodiments, the size of each of the logical blocks corresponds to a number of lines of display of the display divided by a quantity of the logical blocks of each image frame.

In some embodiments, a minimum size of each of the logical blocks is two lines.

In some embodiments, a maximum size of each of the logical blocks is the number of lines of display of the display divided by two.

In some embodiments, the integrated circuit further comprises a memory management unit providing a virtual memory region which maps virtual memory locations in the virtual memory region to physical memory locations in the frame buffer physical memory space. The virtual memory region is divided into two or more virtual memory subregions. Each virtual memory subregion corresponds in size to a size of each of the logical blocks. A quantity of the virtual memory subregions equals a quantity of the logical blocks of each of the image frames. Each of the virtual memory subregions maps identically to the physical memory locations in the frame buffer physical memory space. The controller module is configured to use the virtual memory locations in the virtual memory region to read from the correspondingly mapped physical memory locations in the frame buffer physical memory space.

In some embodiments, prior to rendering a first image frame, all physical memory locations in the frame buffer physical memory space are initialized to zero and the controller module is configured to write an initial frame to the display, the initial frame comprising a same quantity of logical blocks as each of the image frames. When the controller module has read a predetermined number of lines of a last logical block of the initial frame from the frame buffer physical memory space, the graphics framework module is configured to begin rendering a first logical block of the first image frame and writing the first logical block of the first image frame into the frame buffer physical memory space.

In some embodiments, the display comprises a thin film transistor liquid crystal display (TFT-LCD) and the controller module comprises an LCD controller module.

In accordance with various embodiments of the present disclosure, a microcontroller for emulating a full frame buffer for a display controller is provided. In some embodiments, the microcontroller comprises a frame buffer physical memory space; a graphics framework module configured to render a plurality of image frames to be displayed on a display, each image frame rendered in two or more equal size logical blocks, each logical block corresponding to a different portion of the image frame being rendered; and an controller module configured to read each rendered logical block from the frame buffer physical memory space and provide each rendered logical block to the display. A size of each of the logical blocks corresponds to a size of the frame buffer physical memory space. The graphics framework module is configured to write each rendered logical block sequentially into the frame buffer physical memory space. As the controller module is reading each logical block from the frame buffer physical memory space, the graphics framework module is configured to render and write into the frame buffer physical memory space a different, subsequent part of a same logical block of a same image frame, a subsequent logical block of the same image frame, or a first logical block of a subsequent image frame. The graphics framework module is configured to begin writing the different part of the same logical block of the same image frame, the subsequent logical block of the same image frame, or the first logical block of the subsequent image frame into

the frame buffer physical memory space after the controller module has read a number of lines of a previously written portion of a logical block from the frame buffer physical memory space.

In accordance with various embodiments of the present disclosure, a method for emulating a full frame buffer for a display controller is provided. In some embodiments, the method comprises rendering, by a graphics framework module, a plurality of image frames to be displayed on a display, each image frame rendered in two or more equal size logical blocks, each logical block corresponding to a different portion of the image frame being rendered; writing, by the graphics framework module, each rendered logical block sequentially into a frame buffer physical memory space; reading, by a controller module, each rendered logical block from the frame buffer physical memory space; and providing, by the controller module, e each rendered logical block to the display. A size of each of the logical blocks corresponds to a size of the frame buffer physical memory space. As the controller module is reading each logical block from the frame buffer physical memory space, the graphics framework module is configured to render and write into the frame buffer physical memory space a different, subsequent part of a same logical block of a same image frame, a subsequent logical block of the same image frame, or a first logical block of a subsequent image frame. The graphics framework module is configured to begin writing the different part of the same logical block of a same image frame, the subsequent logical block of the same image frame, or the first logical block of the subsequent image frame into the frame buffer physical memory space after the controller module has read a number of lines of a previously written portion of a logical block from the frame buffer physical memory space.

The above summary is provided merely for purposes of summarizing some example embodiments to provide a basic understanding of some aspects of the disclosure. Accordingly, it will be appreciated that the above-described embodiments are merely examples and should not be construed to narrow the scope or spirit of the disclosure in any way. It will also be appreciated that the scope of the disclosure encompasses many potential embodiments in addition to those here summarized, some of which will be further described below.

## BRIEF DESCRIPTION OF THE DRAWINGS

The description of the illustrative embodiments may be read in conjunction with the accompanying figures. It will be appreciated that, for simplicity and clarity of illustration, elements illustrated in the figures have not necessarily been drawn to scale, unless described otherwise. For example, the dimensions of some of the elements may be exaggerated relative to other elements, unless described otherwise. Embodiments incorporating teachings of the present disclosure are shown and described with respect to the figures presented herein, in which:

FIG. 1 illustrates an example block diagram of an example system for emulating a full frame buffer for an LCD controller for a TFT-LCD, in accordance with some embodiments of the present disclosure;

FIG. 2 illustrates an example implementation of virtual memory management in an example system for emulating a full frame buffer for an LCD controller for a TFT-LCD, in accordance with some embodiments of the present disclosure;

FIG. 3 illustrates an example implementation of virtual memory mapping in an example system for emulating a full frame buffer for an LCD controller for a TFT-LCD, in accordance with some embodiments of the present disclosure;

FIG. 4 illustrates an example implementation of logical blocks in an example system for emulating a full frame buffer for an LCD controller for a TFT-LCD, in accordance with an example embodiment of the present disclosure;

FIGS. 5 and 6 illustrate an example implementation of writing to and reading from an example frame buffer in an example system for emulating a full frame buffer for an LCD controller for a TFT-LCD, in accordance with an example embodiment of the present disclosure; and

FIGS. 7-14 illustrate an example implementation of logical blocks and an emulated full frame buffer to display image frames on a TFT-LCD in an example system for emulating a full frame buffer for an LCD controller for a TFT-LCD, in accordance with an example embodiment of the present disclosure.

## DETAILED DESCRIPTION OF THE INVENTION

Some embodiments of the present disclosure will now be described more fully hereinafter with reference to the accompanying drawings, in which some, but not all embodiments of the disclosure are shown. Indeed, these disclosures may be embodied in many different forms and should not be construed as limited to the embodiments set forth herein; rather, these embodiments are provided so that this disclosure will satisfy applicable legal requirements. Like numbers refer to like elements throughout.

As used herein, terms such as "front," "rear," "top," etc. are used for explanatory purposes in the examples provided below to describe the relative position of certain components or portions of components. Furthermore, as would be evident to one of ordinary skill in the art in light of the present disclosure, the terms "substantially" and "approximately" indicate that the referenced element or associated description is accurate to within applicable engineering tolerances.

As used herein, the term "comprising" means including but not limited to and should be interpreted in the manner

it is typically used in the patent context. Use of broader terms such as comprises, includes, and having should be understood to provide support for narrower terms such as consisting of, consisting essentially of, and comprised substantially of.

The phrases "in one embodiment," "according to one embodiment," and the like generally mean that the particular feature, structure, or characteristic following the phrase may be included in at least one embodiment of the present disclosure, and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments, or it may be excluded.

Various embodiments of the present disclosure overcome the above technical challenges and difficulties and provide various technical improvements and advantages based on, for example, but not limited to, providing example integrated circuits, microcontrollers systems, and methods for emulating a full frame buffer for an LCD controller for a TFT-LCD. Various embodiments of the present disclosure provide for emulating a frame buffer such that physical memory space for a full frame buffer is not required to drive an LCD-TFT-not on the MCU/board side and not on the display side. Rather, various embodiments of the present disclosure use a smaller amount of physical memory to store pixels representing only a subregion of the full display. The pixels can be stored in their full color space without compression while requiring significantly less physical memory space. By careful synchronization between the LCD controller and the graphics framework, various embodiments of the present disclosure enable new pixel data to be generated in a just-in-time manner so that it is not necessary to store a full screen of pixels.

Various embodiments of the present disclosure use an LCD controller configuration where the frame buffer address (physical location of where the LCD controller is reading pixel data) can be changed on the fly, even while a frame is being transferred to the display, or use virtual memory management as described below. Various embodiments of the present disclosure use a graphics framework that can render an arbitrary subregion of the screen. The graphics framework must render exactly the specified subregion only, effectively meaning that any graphical element must support partial drawing. Various embodiments of the present disclosure employ a specific synchronization between the LCD controller and the graphics framework, as detailed below.

In various embodiments, the size of the subregion is configurable and can, in principle, be at little as two lines of pixels. Applying this technique does incur a computational overhead, however, which must be taken into account. By experimentation it has been determined that a good generic value representing a tradeoff between RAM saved and computational overhead is to use a subregion of one-quarter of a full frame buffer size, effectively giving a 75% reduction in needed physical memory space. Embodiments of the present disclosure will be described herein using a one-quarter frame buffer and an 800W * 480H TFT-LCD, although embodiments of the present disclosure can be used with any suitably sized frame buffer (such as one-half or one-eighth) and any size TFT-LCD. In various embodiments, choosing the best frame buffer size is application specific.

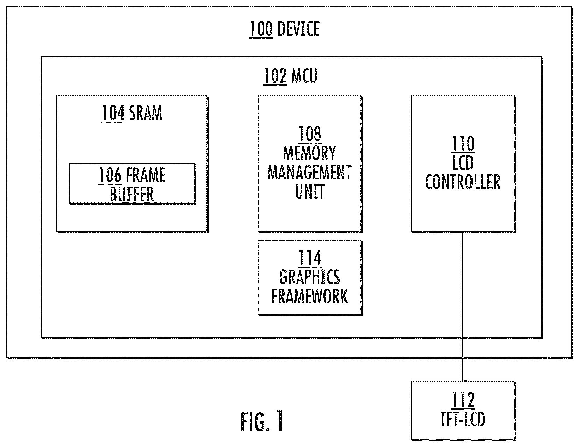

Referring now to FIG. 1, an example block diagram of an example system for emulating a full frame buffer for an LCD controller for a TFT-LCD is illustrated in accordance with some embodiments of the present disclosure. In the illustrated embodiment, a device 100 is connected to a TFT-LCD 112. The device may be any suitable device that displays text and/or images on the TFT-LCD 112, including but not limited to televisions, computer monitors, mobile phones, video game systems, navigation systems, and automotive dashboards. As illustrated, the device 100 comprises a microcontroller (MCU) 102. While such an MCU would likely have significant functionality and comprise many other modules, only the functionality and modules used to implement embodiments of the present disclosure are illustrated.

The MCU 102 comprises SRAM 104, a memory management unit (MMU) 108, an LCD controller 110, and a graphics framework 114. A portion of the SRAM 104 is set aside for the frame buffer 106. As described above, embodiments of the present disclosure enable a much smaller frame buffer and therefore uses much less of the available SRAM 104.

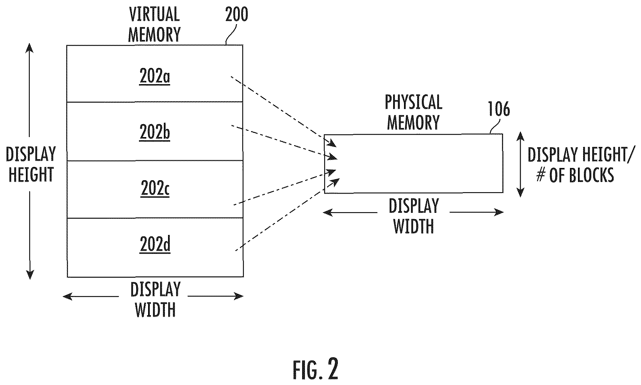

Generally, conventional LCD controllers have a register where the frame buffer starting address is specified. The LCD controller will read pixel data from this address, gradually applying an offset (pixel x, y) as the frame is being processed. The current offset can typically be read from other registers (current line (y), current column (x)). However, due to how conventional LCD controllers are implemented internally, how conventional LCD controllers are connected on the MCU memory interface with possible first-in, first-out (FIFO) buffers, and how conventional LCD controllers make memory reads, it is normally not possible to just change the frame buffer address register on the fly. Conventional LCD controllers are typically not designed for this use case, as normally you would only change that address once per frame (around the time of VSYNC). In various embodiments of the present disclosure, the LCD controller may be modified from its

conventional design to enable the LCD controller to change the frame buffer address register on the fly. Alternatively, various embodiments of the present disclosure may provide a workaround for devices that have a conventional LCD controller with this limitation, as described below and illustrated in FIG. 2.

Various embodiments of the present disclosure employ a memory management unit (such as MMU 108 of FIG. 1) to expose a virtual address space for the LCD controller in such a way that it is not necessary to change the frame buffer address on the fly. The MMU provides a virtual memory region of a full frame buffer size (Display-Width * Display-Height * Color-Depth-In-Bits), with the virtual memory region divided into a number of subregions. The number of subregions of the virtual memory region corresponds to the number of subregions into which each image frame is divided and rendered by the graphics framework. Each subregion of the virtual memory region maps to the same physical RAM. The LCD controller is then configured to use the virtual memory address, and no address change is needed - each subregion will automatically point to the correct locations in physical memory.

FIG. 2 illustrates an example implementation of a virtual memory in an example system for emulating a full frame buffer for an LCD controller for a TFT-LCD, in accordance with some embodiments of the present disclosure. As seen in FIG. 2, a virtual memory region 200 is divided into four subregions 202a-d. The virtual memory region 200 has the same size as the screen of the TFT-LCD (e.g., 800W * 480H pixels (note, the virtual memory region 200 of FIG. 2 is not to scale)) and therefore has the same size of each image frame that is rendered and saved to memory by the graphics framework and read and sent to the TFT-LCD (such as TFT-LCD 112 of FIG. 1) by the LCD controller (such as LCD controller 110 of FIG. 1). As seen in FIG. 2, each subregion 202a-d of the virtual memory region 200 maps to the same physical memory space (such as frame buffer 106 of FIG. 2). In the illustrated embodiment, the frame buffer 106 has a size of 800W * 120H pixels (i.e., one-fourth the height of the virtual memory region 200 in this specific example).

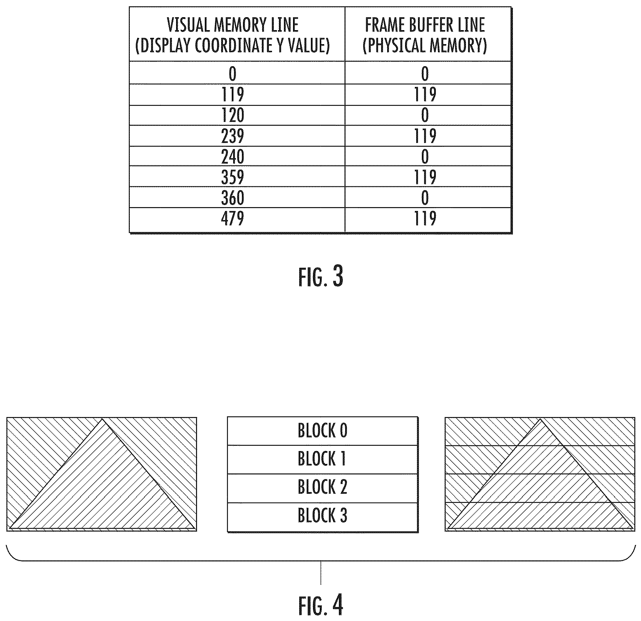

This virtual memory mapping is further illustrated in FIG. 3. The table of FIG. 3 shows the virtual memory region addressing in the left column and the corresponding physical memory addressing in the right column. As seen in FIG. 3, the virtual memory region addressing spans from line 0 to line 479 (i.e., 480 lines which equals the height of the display screen and of each image frame to be displayed), while the frame buffer addressing spans from line 0 to line 119 (i.e., 120 lines which equals one-fourth the height of the virtual memory region). As seen in FIG. 3, lines 0 to 119 of the virtual memory region map to lines 0 to 119 of the frame buffer, lines 120 to 239 of the virtual memory region also map to lines 0 to 119 of the frame buffer, lines 240 to 359 of the virtual memory region also map to lines 0 to 119 of the frame buffer, and lines 360 to 479 of the virtual memory region also map to lines 0 to 119 of the frame buffer. In this regard, the LCD controller can reference address lines 0 to 479 as normal but be directed to and read the pixels from the appropriate one of lines 0 to 119 in the frame buffer to read the subregion of the image frame which the graphics framework has rendered and the LCD controller will send to the display.

As described above, various embodiments of the present disclosure use a graphics framework that can render an arbitrary subregion of the screen. The graphics framework must render exactly the specified subregion only, so that the graphical element must support partial drawing. FIG. 4 illustrates an example implementation of logical blocks in an example system for emulating a full frame buffer for an LCD controller for a TFT-LCD, in accordance with an example embodiment of the present disclosure. In various embodiments, each image frame is rendered in two or more equal size subregions (which may be termed logical blocks), with each logical block corresponding to a different portion of the image frame being rendered. The left side image of FIG. 4 illustrates an image frame in which a triangle is rendered in one color with a different colored background (the different colors are represented in the figures by different patterns). In the example embodiment, each image frame is divided into four subregions or logical blocks. The center image of FIG. 4 shows how such logical blocks may be numbered block 0 to block 3, such that block 0 logically corresponds to the top quarter of the screen and block 3 to the lowest quarter of the screen. The right side image of FIG. 4 illustrates the image of the triangle as it would be split into the four logical blocks. In various embodiments, the logical blocks are all equal in size and correspond in size to each subregion of the virtual memory region and to the frame buffer. In various embodiments, any suitable logical block size may be used as long as each block has a height of at least two lines.

Embodiments of the present disclosure synchronize the LCD controller operation with the graphics framework rendering to ensure that the correct pixels are ready in the (reduced size) frame buffer when the LCD controller needs to consume them. This synchronization of embodiments of the present disclosure are described herein using an example of a one-quarter frame buffer on an 800 * 480 pixel display but is applicable to any reduced frame buffer size and any display resolution.

In various embodiments, the frame buffer will, as the rendering of a frame progresses, correspond to one or two of the logical blocks, starting with block 0. In the case of a 480 line display with a logical block size of 120 lines, the active block will be, for example, block 1 when the LCD controller is working on lines 120-239. In various embodiments, the frame buffer will, at times, be accessed simultaneously by the graphics framework and the LCD controller. The graphics framework writes new pixel data into the frame buffer, and the LCD controller reads the pixel data from the frame buffer and transmits the pixel data to the display.

In various embodiments, when rendering a logical block of an image frame, the graphics framework works ahead of the LCD controller. That is, the graphics framework is rendering the logical block ahead of the logical block that the LCD

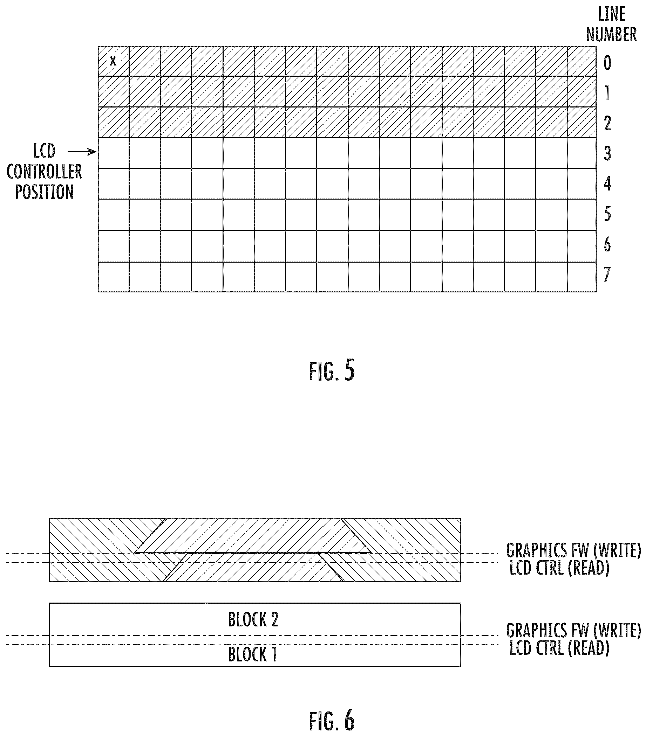

controller is reading from the frame buffer and sending to the TFT-LCD. For example graphics framework would be rendering logical block 2 while the LCD controller is reading logical block 1 from the frame buffer to send to the TFT-LCD. In contrast, however, when writing pixel data of a logical block to the frame buffer, the graphics framework must always stay behind the LCD controller. When the LCD controller has read a line of pixel data from the frame buffer and transferred that pixel data to the display, that particular line in the frame buffer is available for the graphics framework to write new pixels (i.e., pixels from the subsequent logical block). It would be an error for the graphics framework to write past the position of the LCD controller, as it would cause pixels to be sent to the display at an incorrect time, causing them to appear in the wrong place of the screen. This relationship is seen in FIGS. 5 and 6.

FIGS. 5 and 6 illustrate an example implementation of writing to and reading from an example frame buffer in an example system for emulating a full frame buffer for an LCD controller for a TFT-LCD, in accordance with an example embodiment of the present disclosure. In FIG. 5 (which shows a very small (16W * 8H) example frame buffer for simplicity), the LCD controller is currently accessing line number 3. This means the pixels in lines 0-2 have already been read and transferred to the TFT-LCD, and those lines are available for the graphics framework to write new pixel data into. Note that regarding screen coordinates, due to the use of the virtual memory region described above, the pixels in the frame buffer may map to different coordinates for the LCD controller and the graphics framework respectively. The controlling factor is which block the LCD controller currently accesses. In various embodiments, to calculate which line on the actual screen a given line number in the frame buffer represents, the following equations are used:

Active-Block-Number = Integer of (Current-LCD-Line-Position / Block-Height);

Screen-Line-For-LCD-Controller = (Active-Block-Number * Block-Height) + Line-Number; and

Screen-Line-For-Graphics-Framework = ((Active-Block-Number + 1) % Block-Count) * Block-Height + Line-Number.

Thus, for example, with a block count of 4 and a block height of 120 (i.e., a 480 pixel high display with quarter frame buffer), the first pixel on line 0 (denoted by the * in FIG. 5) will correspond to the following on the actual TFT-LCD screen, assuming that LCD controller is processing block 3 (the last block): LCD controller -> screen line 360, and graphics framework -> screen line 0. So the pixels the graphics framework must put into the first three lines in FIG. 5 are those that go into the top three lines of the screen. If instead the LCD controller was working in block 1 (transferring lines 120-239 to the display), the graphics framework would work on lines 240 onwards.

FIG. 6 illustrates a frame buffer both in terms of example pixel content (top image) and the logical block mapping (bottom image). The top dotted line in each image in FIG. 6 indicates the position where the graphics framework is currently writing and the bottom dotted line indicates the position where the LCD controller is currently reading. FIG. 6 shows the LCD controller reading pixel data of block 1 in the lower portion of the frame buffer to send to the display and shows the graphics framework writing new pixel data for block 2 into the top portion of the frame buffer. Since the graphics framework must stay behind the LCD controller in terms of line position, as discussed above, FIG. 6 shows a gap (between the two dashed lines) between the block 1 pixels not yet read (below the lower dashed line) and the block 2 pixels written (above the upper dashed line), representing pixels for which the pixel data has already been read and transferred by the LCD controller and are thus free to be overwritten by the graphics framework, but for which the pixels have not yet been overwritten. In summary, the bottom portion of the frame buffer contains pixels for the current block to be transferred immediately to the display, while the top portion of the frame buffer is simultaneously written by the graphics framework with pixel data for the next block.

To begin rendering the first frame, the graphics framework must wait until the LCD controller enters the last logical block. When the LCD controller has begun reading pixel data of the last logical block from the frame buffer, the graphics framework can begin rendering pixels that will show up on the top of the display. That is, the graphics framework can begin rendering pixels of logical block 0 of the next image frame. The graphics framework will then stay behind the LCD controller progression, but filling pixel data for the next block. Thus, once the LCD controller completes its cycle, wraps around and begins to transfer the pixels that go to the top of the screen, the frame buffer will be already filled with those pixels. Simultaneously, the graphics framework can begin working on pixels for block 1, as soon as at least some block 0 pixels have been read by the LCD controller.

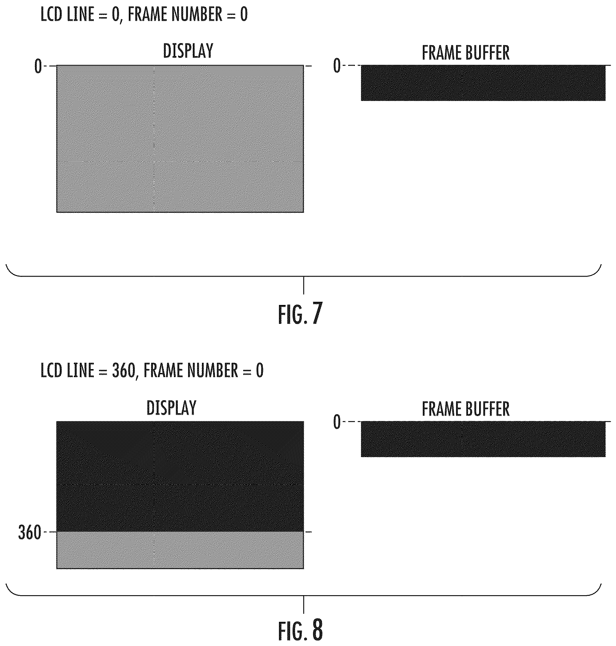

FIGS. 7-14 illustrate this process by showing the both the current display contents (on the left side of each figure) and the frame buffer contents (on the right side of each figure) at various points in time (time is indicated by LCD controller line position provided and by the line number and frame number at the top of each figure).

As shown in FIG. 7, at the very beginning the LCD controller starts at line 0 in both the display and the frame buffer. In various embodiments, the frame buffer is initialized with zeros (meaning pixels are all black as shown in FIG. 7) and nothing has been transferred to the display yet (indicated by grey as shown in FIG. 7). The initialization of the frame buffer is

typically done by the MCU during system boot. The initial four logical blocks of all zeros (i.e., black) transferred to the display may be termed an initial frame, which is to be distinguished from the first (and subsequent) image frames. In some embodiments, the frame buffer may be initialized with some value other than all zeros. In some embodiments, the display of an initial frame may be omitted.

As shown in FIG. 8, when the LCD controller has moved to line 360 on the display, the first three logical blocks of black color have been transferred to the display. Because the LCD controller will begin transferring the last logical block now, this is the point where the graphics framework can begin rendering logical block 0 of the first image frame and the graphics framework can begin writing the rendered pixels when the LCD controller has moved a few additional lines down (in various embodiments, this number of lines is predetermined and may be, for example, three or four lines).

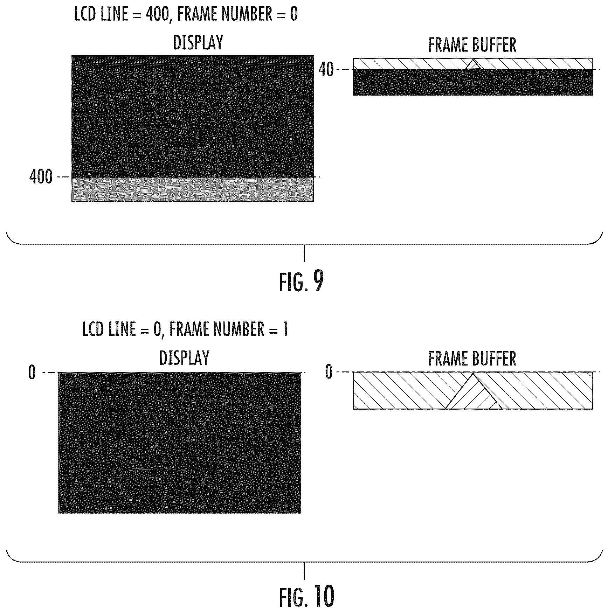

As shown in FIG. 9, the LCD controller has moved 40 additional lines down (to line 400), sending black pixels to the display line by line. The top 40 lines of the frame buffer are thus free to be overwritten by the graphics framework with the logical block 0 of the first image frame. In the example of FIG. 9, the graphics framework has already rendered at least part of logical block 0 of the first image frame (i.e., the pixels that go into the top lines of the display) and saved those pixels in the frame buffer. In one example embodiment, the graphics framework would have begun writing the pixels of logical block 0 of the first image frame once the LCD controller had read the pixels from the first three lines of the frame buffer. Although not visible in FIGS. 9, 11, 12, or 14, there would be gap between a block's pixels not yet read and a subsequent block's pixels written (as described above in relation to FIG. 6) (e.g., three or four lines) to help ensure that the graphics framework does not write over pixels that have not yet been read by the LCD controller.

As shown in FIG. 10, the LCD controller has wrapped around to line 0 such that the display is now fully black, and the graphics framework has completed its rendering of the first block (block 0) of the first image frame into the frame buffer.

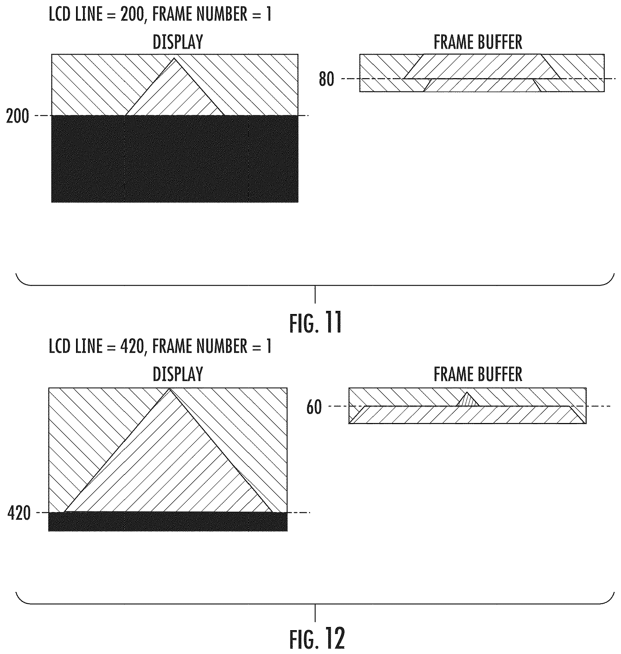

As shown in FIG. 11, the first 200 lines of frame 1 (which is all of block 0 and 80 lines of block 1) have been transferred to the display. The contents of the frame buffer is split on line 80 (i.e., 200 - Block-Height), with the lower portion of the frame buffer containing the next pixels for the LCD controller to transfer to the display from line 200 and the upper portion containing new pixel data for when the LCD controller reaches next block at line 240.

As shown in FIG. 12, the LCD controller has read and transferred 420 lines of frame 1 (all of blocks 0, 1, and 2 and 60 lines of block 3) to the display. The frame buffer is split on line 60 (420 - (3 * Block-Height)), with the lower portion of the frame buffer containing the next pixels for the LCD controller to be put on the display from line 420 and the upper portion containing new pixel data for when the LCD controller reaches next block (block 0 of image frame 2) at line 480. The rendered and saved portion of block 0 of image frame 2 is the tip of the triangle in a different color (represented by a different pattern).

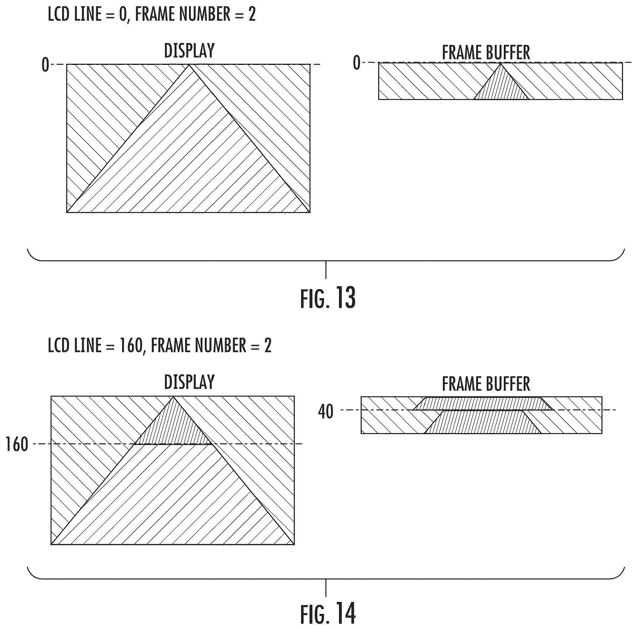

FIG. 13 shows the start of image frame 2. As shown in FIG. 13, all pixels of image frame 1 has been transferred to the display, and the graphics framework has completed rendering and saving block 0 of image frame 2 into the frame buffer.

As shown in FIG. 14, the LCD controller has read and transferred 160 lines of image frame 2 (all of block 0 and 40 lines of block 1) to the display. The frame buffer is split on line 40 (160 - Block-Height), with the lower portion of the frame buffer containing the next pixels for the LCD controller to be put on the display from line 160 and the upper portion containing new pixel data for when the LCD controller reaches next block (block 1 of image frame 2) at line 240.

Various embodiments of the present disclosure use three configurable parameters: minimum drawing height, maximum drawing height, and block size.

Because there will be an overhead associated with initiating a draw operation in any graphics framework, it can be beneficial to place a lower limit on the number of lines being drawn at one time. If, for example, the LCD controller position is such that only one line of the frame buffer is available, the graphics framework should wait a bit before beginning a draw to allow for a bigger portion of the image to draw. This can be implemented as a delay in microseconds if the operating system supports that, or by requesting an interrupt from the LCD controller when the LCD controller has reached a certain line.

Conversely, it can also be beneficial to place an upper limit on the number of lines the graphics framework will begin drawing at one time. There is already a maximum in that the graphics framework is not allowed to progress further in the frame buffer than where the LCD controller currently is, but even this can be too much. The reason is that once the graphics framework has begun drawing pixels, there is only a certain specific amount of time until the LCD controller reaches that point in the frame buffer again, at which point the rendering must be completed. There is therefore a risk that the graphics framework has to render more lines than it is capable of rendering in time, and so a configurable maximum number of lines is recommended.

The block size is the number of lines in a block, essentially defining the amount of RAM needed for frame buffer. The block size represents a trade-off between RAM usage and how vulnerable the system is to tearing due to missed timing constraints. Consider the case of a block size of two lines (which maximizes RAM savings), in which the graphics framework must be able to complete rendering of any line of the screen in the same time as it takes the LCD controller to transfer a line. But with a larger block size this constraint is evened out, making it easier to handle if some lines are more complex than others to draw.

Determining the optimal value for these three parameters is difficult to do generically but may be done by heuristics, including screen size and screen complexity. Based on experimentation, an example embodiment of the

present disclosure has a minimum drawing height of twelve lines, a maximum drawing height of forty lines, and a block size of Display-Height / four lines. In various embodiments, these parameters are changeable at runtime as they depend on whatever is currently on the screen.

Various embodiments of the present disclosure can work on any microcontroller that features an LCD controller that supports having a smaller-than-full frame buffer, either by virtue of allowing the frame buffer address register to be updated at an arbitrary time or by employing a memory management unit (as described above) to make it appear as if there is a full screen frame buffer using memory mapping.

Because various embodiments of the present disclosure do not use a full frame buffer anywhere and the LCD controller must continuously update the display even if no pixels change, various embodiments of the present disclosure require that all pixels of the screen must be calculated in every single frame. This leads to a higher MCU load than typical, as typically the MCU can just sleep if there are no changes to the pixels from one frame to another. In addition, various embodiments of the present disclosure have a timing constraint in that the graphics framework must be able to render a block of new pixels at approximately the same rate as the LCD controller consumes a block (the graphics framework can be a little slower occasionally).

Various embodiments of the present disclosure enable a very significant (75% or more in some embodiments) reduction in RAM usage for frame buffer, with no reduction in color space or number of colors, no specialized compression hardware needed, and realizable on typical LCD-TFT controllers and displays. Thus, various embodiments of the present disclosure enable implementation of modern user interfaces with a substantial cost reduction of the end product.

Although components are described with respect to functional limitations, it should be understood that the particular implementations necessarily include the use of particular computing hardware. It should also be understood that in some embodiments certain of the components described herein include similar or common hardware. For example, in some embodiments two sets of circuitries both leverage use of the same processor(s), memory(ies), circuitry(ies), and/or the like to perform their associated functions such that duplicate hardware is not required for each set of circuitry.

As described above and as will be appreciated based on this disclosure, embodiments of the present disclosure may be configured as methods, devices, backend network devices, and the like. Accordingly, embodiments may comprise various means including entirely of hardware or any combination of software and hardware. Furthermore, embodiments may take the form of a computer program product on at least one non-transitory computer-readable storage medium having computer-readable program instructions (e.g., computer software) embodied in the storage medium. Similarly, embodiments may take the form of a computer program code stored on at least one non-transitory computer-readable storage medium. Any suitable computer-readable storage medium may be utilized including non-transitory hard disks, CD-ROMs, flash memory, optical storage devices, or magnetic storage devices.

Some or all of the functionality described herein may be implemented as part of an integrated circuit (IC) (e.g., MCU 102) to perform, for example, one or more functions described herein. The processing elements described herein may include one or more processors, input/output circuitry, data storage media, communications circuitry, and/or other components configured to perform compute operations. In some embodiments, the data storage media may be configured to store information, data, content, applications, instructions, or the like, for enabling the processing elements described herein to carry out various functions. As such, in some embodiments, the processing elements described herein may be referred to as functional logic. The processing elements described herein may be embodied in a number of different ways, for example, in some embodiments, the processing elements described herein may include one or more processing devices configured to perform independently. Additionally or alternatively, in some embodiments, the processing elements described herein may include one or more processor(s) configured in tandem via a bus to enable independent execution of instructions, pipelining, and/or multithreading. The use of the terms "controller," "processor," "control circuitry," and "processing circuitry" should be understood to include a single core processor, a multi-core processor, multiple processors internal to the processing elements described herein, and/or one or more remote or "cloud" processor(s) external to the processing elements described herein.

In an example embodiment, the processing elements described herein may be configured to execute instructions stored in the data storage media or otherwise accessible to the processor. Alternatively or additionally, the processing elements described herein in some embodiments is configured to execute hard-coded functionality. As such, whether configured by hardware or software methods, or by a combination thereof, the processing elements described herein represent an entity (e.g., physically embodied in circuitry) capable of performing operations according to an embodiment of the present disclosure while configured accordingly. Alternatively or additionally, as another example in some example embodiments, when the processing elements described herein is embodied as an executor of software instructions, the instructions specifically configure the processing elements described herein to perform the algorithms embodied in the specific operations described herein when such instructions are executed.

The use of the term "circuitry" as used herein with respect to components of the apparatus should therefore be understood to include particular hardware configured to perform the functions associated with the particular circuitry as described herein. The term "circuitry" should be understood broadly to include hardware and, in some embodiments, software for configuring the hardware. For example, in some embodiments, "circuitry" may include processing circuitry,

storage media, network interfaces, input/output devices, and the like.

Conclusion

Many modifications and other embodiments of the disclosures set forth herein will come to mind to one skilled in the art to which these disclosures pertain having the benefit of teachings presented in the foregoing descriptions and the associated drawings. Although the figures only show certain components of the apparatus and systems described herein, it is understood that various other components may be used in conjunction with the system. Therefore, it is to be understood that the disclosures are not to be limited to the specific embodiments disclosed and that modifications and other embodiments are intended to be included within the scope of the appended claims. Moreover, the steps in the method described above may not necessarily occur in the order depicted in the accompanying diagrams, and in some cases one or more of the steps depicted may occur substantially simultaneously, or additional steps may be involved. Although specific terms are employed herein, they are used in a generic and descriptive sense only and not for purposes of limitation.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Additionally, the section headings used herein are provided for consistency with the suggestions under 37 C.F.R. 1.77 or to otherwise provide organizational cues. These headings shall not limit or characterize the disclosure(s) set out in any claims that may issue from this disclosure.

While this detailed description has set forth some embodiments of the present disclosure, the appended claims cover other embodiments of the present disclosure which differ from the described embodiments according to various modifications and improvements. For example, the appended claims can cover any form of system, device, integrated circuit, or method which renders images for a TFT-LCD or any other displays that are updated in a similar fashion.

Within the appended claims, unless the specific term "means for" or "step for" is used within a given claim, it is not intended that the claim be interpreted under 35 U.S.C. 112, paragraph 6.

## Claims

**1.** An integrated circuit for emulating a full frame buffer for a controller for a display, the integrated circuit comprising:

a frame buffer physical memory space;
a graphics framework module configured to render a plurality of image frames to be displayed on a display, each image frame rendered in two or more equal size logical blocks, each logical block corresponding to a different portion of the image frame being rendered; and
a controller module configured to read each rendered logical block from the frame buffer physical memory space and provide each rendered logical block to the display;
wherein a size of each of the logical blocks corresponds to a size of the frame buffer physical memory space;
wherein the graphics framework module is configured to write each rendered logical block sequentially into the frame buffer physical memory space;
wherein, as the controller module is reading each logical block from the frame buffer physical memory space, the graphics framework module is configured to render and write into the frame buffer physical memory space a different, subsequent part of a same logical block of a same image frame, a subsequent logical block of the same image frame, or a first logical block of a subsequent image frame; and
wherein the graphics framework module is configured to begin rendering and writing the different, subsequent part of the same logical block of the same image frame, the subsequent logical block of the same image frame, or the first logical block of the subsequent image frame into the frame buffer physical memory space after the controller module has read a number of lines of a previously written portion of a logical block from the frame buffer physical memory space.

**2.** The integrated circuit of claim 1, wherein the size of each of the logical blocks corresponds to a number of lines of display of the display divided by a quantity of the logical blocks of each image frame.

**3.** The integrated circuit of claim 2, wherein a minimum size of each of the logical blocks is two lines.

4. The integrated circuit of claim 2, wherein a maximum size of each of the logical blocks is the number of lines of display of the display divided by two.

5. The integrated circuit of any one of claims 1 to 4, further comprising a memory management unit providing a virtual memory region which maps virtual memory locations in the virtual memory region to physical memory locations in the frame buffer physical memory space;

wherein the virtual memory region is divided into two or more virtual memory subregions;
wherein each virtual memory subregion corresponds in size to a size of each of the logical blocks;
wherein a quantity of the virtual memory subregions equals a quantity of the logical blocks of each of the image frames;
wherein each of the virtual memory subregions maps identically to the physical memory locations in the frame buffer physical memory space; and
wherein the controller module is configured to use the virtual memory locations in the virtual memory region to read from the correspondingly mapped physical memory locations in the frame buffer physical memory space.

6. The integrated circuit of any one of claims 1 to 5, wherein, prior to rendering a first image frame, all physical memory locations in the frame buffer physical memory space are initialized to zero and the controller module is configured to write an initial frame to the display, the initial frame comprising a same quantity of logical blocks as each of the image frames; and
wherein, when the controller module has read a predetermined number of lines of a last logical block of the initial frame from the frame buffer physical memory space, the graphics framework module is configured to begin rendering a first logical block of the first image frame and writing the first logical block of the first image frame into the frame buffer physical memory space.

7. The integrated circuit of any one of claims 1 to 6, wherein the display comprises a thin film transistor liquid crystal display (TFT-LCD) and the controller module comprises an LCD controller module.

8. The integrated circuit of any one of claims 1 to 7, wherein the integrated circuit is a microcontroller unit for emulating a full frame buffer for a controller for a display.

9. A method for emulating a full frame buffer for a controller for a display, the method comprising:

rendering, by a graphics framework module, a plurality of image frames to be displayed on a display, each image frame rendered in two or more equal size logical blocks, each logical block corresponding to a different portion of the image frame being rendered;
writing, by the graphics framework module, each rendered logical block sequentially into a frame buffer physical memory space;
reading, by a controller module, each rendered logical block from the frame buffer physical memory space; and
providing, by the controller module, e each rendered logical block to the display;
wherein a size of each of the logical blocks corresponds to a size of the frame buffer physical memory space;
wherein, as the controller module is reading each logical block from the frame buffer physical memory space, the graphics framework module is configured to render and write into the frame buffer physical memory space a different, subsequent part of a same logical block of a same image frame, a subsequent logical block of the same image frame, or a first logical block of a subsequent image frame; and
wherein the graphics framework module is configured to begin rendering and writing the different, subsequent part of the same logical block of a same image frame, the subsequent logical block of the same image frame, or the first logical block of the subsequent image frame into the frame buffer physical memory space after the controller module has read a number of lines of a previously written portion of a logical block from the frame buffer physical memory space.

10. The method of claim 9, wherein the size of each of the logical blocks corresponds to a number of lines of display of the display divided by a quantity of the logical blocks of each image frame.

11. The method of claim 10, wherein a minimum size of each of the logical blocks is two lines and a maximum size of each of the logical blocks is the number of lines of display of the display divided by two.

12. The method of any one of claims 9 to 11, wherein the display comprises a thin film transistor liquid crystal display (TFT-

LCD) and the controller module comprises an LCD controller module.

**13.** The method of any one of claims 9 to 12, wherein a virtual memory region maps virtual memory locations in the virtual memory region to physical memory locations in the frame buffer physical memory space;

wherein the virtual memory region is divided into two or more virtual memory subregions;
wherein each virtual memory subregion corresponds in size to a size of each of the logical blocks;
wherein a quantity of the virtual memory subregions equals a quantity of the logical blocks of each of the image frames;
wherein each of the virtual memory subregions maps identically to the physical memory locations in the frame buffer physical memory space; and
wherein the controller module is configured to use the virtual memory locations in the virtual memory region to read from the correspondingly mapped physical memory locations in the frame buffer physical memory space.

**14.** The method of any one of claims 9 to 13, further comprising:

prior to rendering a first image frame, initializing all physical memory locations in the frame buffer physical memory space to zero and writing, by the controller, an initial frame to the display, the initial frame comprising a same quantity of logical blocks as each of the image frames;
wherein, when the controller module has read a predetermined number of lines of a last logical block of the initial frame from the frame buffer physical memory space, rendering, by the graphics framework module, a first logical block of the first image frame and writing, by the graphics framework module, the first logical block of the first image frame into the frame buffer physical memory space.

100 DEVICE
102 MCU
104 SRAM
106 FRAME BUFFER
108 MEMORY MANAGEMENT UNIT
110 LCD CONTROLLER
114 GRAPHICS FRAMEWORK
112 TFT-LCD

FIG. 1

VIRTUAL MEMORY
200
202a
202b
202c
202d
DISPLAY HEIGHT
DISPLAY WIDTH
PHYSICAL MEMORY
106
DISPLAY HEIGHT/ # OF BLOCKS
DISPLAY WIDTH

FIG. 2

| VISUAL MEMORY LINE (DISPLAY COORDINATE Y VALUE) | FRAME BUFFER LINE (PHYSICAL MEMORY) |
|---|---|
| 0 | 0 |
| 119 | 119 |
| 120 | 0 |
| 239 | 119 |
| 240 | 0 |
| 359 | 119 |
| 360 | 0 |
| 479 | 119 |

FIG. 3

BLOCK 0
BLOCK 1
BLOCK 2
BLOCK 3

FIG. 4

LINE NUMBER
X
0
1
2
3
4
5
6
7
LCD CONTROLLER POSITION

FIG. 5

GRAPHICS FW (WRITE)
LCD CTRL (READ)
BLOCK 2
BLOCK 1
GRAPHICS FW (WRITE)
LCD CTRL (READ)

FIG. 6

LCD LINE = 0, FRAME NUMBER = 0
DISPLAY
0
FRAME BUFFER
0
LCD LINE = 360, FRAME NUMBER = 0
DISPLAY
360
FRAME BUFFER
0

FIG. 7

FIG. 8

LCD LINE = 400, FRAME NUMBER = 0
DISPLAY
FRAME BUFFER
40
400
LCD LINE = 0, FRAME NUMBER = 1
DISPLAY
FRAME BUFFER
0
0

FIG. 9

FIG. 10

LCD LINE = 200, FRAME NUMBER = 1
DISPLAY
FRAME BUFFER
80
200
LCD LINE = 420, FRAME NUMBER = 1
DISPLAY
FRAME BUFFER
60
420

FIG. 11

FIG. 12

LCD LINE = 0, FRAME NUMBER = 2
DISPLAY
0
FRAME BUFFER
0
LCD LINE = 160, FRAME NUMBER = 2
DISPLAY
160
FRAME BUFFER
40

FIG. 13

FIG. 14

Europäisches
Patentamt
European
Patent Office
Office européen
des brevets

# EUROPEAN SEARCH REPORT

Application Number
EP 26 15 5590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/002060 A1 (KING SCOTT HOWARD [US] ET AL) 4 January 2007 (2007-01-04) * paragraphs [0003], [0024] - [0052]; figures 1-9 * ----- | 1-14 | INV. G09G5/393 G09G5/395 |
| X | US 2005/184993 A1 (LUDWIN ALBERT S [US] ET AL) 25 August 2005 (2005-08-25) * paragraphs [0010], [0053] - [0056]; figures 1-3 * ----- | 1-14 | |

TECHNICAL FIELDS SEARCHED (IPC)

G09G

The present search report has been drawn up for all claims

1

| Place of search | Date of completion of the search | Examiner |
|---|---|---|
| The Hague | 15 May 2026 | Pichon, Jean-Michel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 26 15 5590

This annex lists the patent family members relating to the patent documents cited in the above-mentioned European search report. The members are as contained in the European Patent Office EDP file on
The European Patent Office is in no way liable for these particulars which are merely given for the purpose of information.

15-05-2026

| Patent document cited in search report | Publication date | Patent family member(s) | Publication date |
|---|---|---|---|
| US 2007002060 A1 | 04-01-2007 | NONE | |
| US 2005184993 A1 | 25-08-2005 | KR 20070022236 A | 26-02-2007 |
| | | KR 20080088663 A | 02-10-2008 |
| | | US 2005184993 A1 | 25-08-2005 |
| | | WO 2005083672 A2 | 09-09-2005 |

EPO FORM P0459

For more details about this annex : see Official Journal of the European Patent Office, No. 12/82